**Europäisches Patentamt**

**European Patent Office**

**Office européen des brevets**

(19)

(11) Veröffentlichungsnummer: **0 203 612 B1**

(12) **EUROPÄISCHE PATENTSCHRIFT**

(45) Veröffentlichungstag der Patentschrift:
16.01.91 Patentblatt 91/03

(51) Int. Cl.⁵: **B32B 15/08**

(21) Anmeldenummer: **86107359.1**

(22) Anmeldetag: **30.05.86**

(54) **Verbundfolie.**

(30) Priorität: **31.05.85 DE 3519461**

(43) Veröffentlichungstag der Anmeldung:
**03.12.86 Patentblatt 86/49**

(45) Bekanntmachung des Hinweises auf die
Patenterteilung:
**16.01.91 Patentblatt 91/03**

(84) Benannte Vertragsstaaten:
**AT BE CH DE FR GB IT LI NL SE**

(56) Entgegenhaltungen:
**EP-A- 0 031 701**
**DE-A- 2 403 034**
**US-A- 3 347 419**
**US-A- 4 363 841**

(73) Patentinhaber: **UNILEVER NV**
**Burgemeester s'Jacobplein 1 P.O. Box 760**
**NL-3000 DK Rotterdam (NL)**
**BE CH DE FR IT LI NL SE AT**
Patentinhaber: **UNILEVER PLC**
**Unilever House Blackfriars P.O. Box 68**
**London EC4P 4BQ (GB)**
**GB**

(72) Erfinder: **Nassel, Wilfried**
**Egerlandstrasse 12**
**D-8960 Kempten (DE)**

(74) Vertreter: **Hutzelmann, Gerhard et al**
**Duracher Strasse 22**
**D-8960 Kempten/Allgäu (DE)**

## Beschreibung

Die Erfindung betrifft eine Verbundfolie, insbesondere zum Herstellen von Behältern, mit einer Mittelschicht aus Aluminium sowie zwei Deckschichten aus Kunststoff, die über jeweils eine vorzugsweise aus einem Copolymeren aus Äthylen-Acrylsäure bestehenden Kleber-Zwischenschicht mit der Mittelschicht verbunden sind.

Eine derartige Verbundfolie ist aus der DE-A-2 403 034 bekannt, wobei zwischen den dortigen Einzellagen eine Bedruckung vorgesehen sein kann.

Derartige Verbundfolien unterliegen einer Vielzahl von Anforderungen; sie müssen mindestens gegenüber verschiedenen Medien dicht, gegen sich selbst versiegelbar und gut bedruckbar sein. Gerade die gute Bedruckbarkeit macht am meisten Schwierigkeiten und ist auch beim Stand der Technik nicht gelöst.

Der Erfindung liegt die Aufgabe zugrunde, eine Verbundfolie der genannten Art so auszugestalten, daß sie neben den zwangsläufig notwendigen Eigenschaften wie Dichtigkeit und Siegelbarkeit auch gut bedruckbar ist.

Diese Aufgabe wird erfindungsgemäß dadurch gelöst, daß die äußere Deckschicht aus zwei miteinander coextrudierten Lagen aus Polyäthylen oder eines Copolymeren aus Äthylen und Vinylacetat besteht, von denen die innere eingefärbt und die äußere transparent ist.

Durch die getrennte Coextrudierung der Deckschicht wird für diese bereits eine sehr gut bedruckbare Oberfläche erzielt, die durch evtl. Unebenheiten od. dgl. in der Mittelschicht nicht mehr nachteilig beeinflußt wird.

Bei den bekannten Verbundfolien dieser Art wurden dagegen die einzelnen Lagen nacheinander auf die Mittelschicht aus Aluminium aufgebracht. Evtl. Fehler in den einzelnen Lagen glichen sich dabei kaum aus; sie summierten sich häufig und führten zumindest zu einer schlechten Bedruckbarkeit. Im Extremfall konnte dadurch sogar die Dichtigkeit nachteilig beeinflußt werden.

Sehr vorteilhaft ist es auch, wenn erfindungsgemäß auch die innere Deckschicht aus zwei miteinander coextrudierten Lagen aus Polyäthylen oder eines Copolymeren aus Äthylen und Vinylacetat besteht.

Die dabei erzielte Verbesserung der inneren Oberfläche ist sowohl bezüglich der Dichtigkeit als auch der Versiegelungseigenschaften der Verbundfolie ganz erheblich. Eine Verbesserung der Steifigkeit ist ebenfalls möglich.

In der Zeichnung sind zwei Ausführungsbeispiele der erfindungsgemäßen Verbundfolie dargestellt. Dabei zeigen:

Fig. 1 eine Verbundfolie, deren äußere Deckschicht aus zwei miteinander coexrtrudierten Lagen aus Polyäthylen besteht und

Fig. 2 eine Verbundfolie, bei der sowohl die äußere als auch die innere Deckschicht aus jeweils zwei miteinander coextrudierten Lagen aus Polyäthylen gebildet ist.

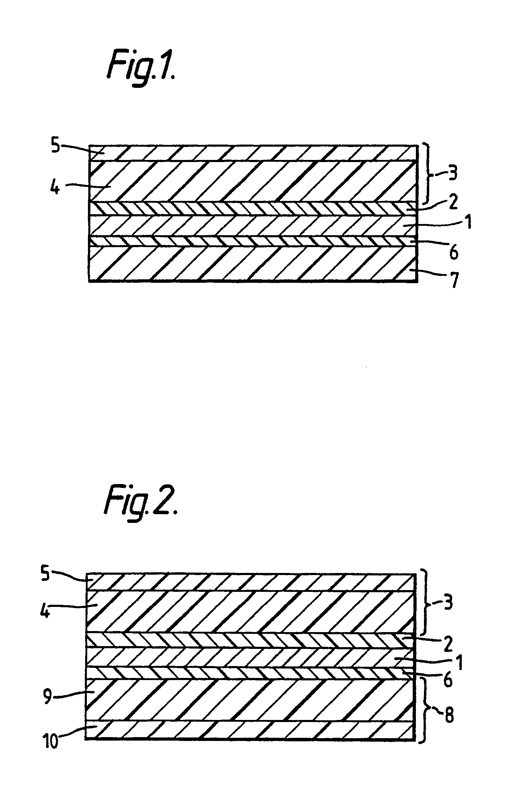

Beim Ausführungsbeispiel nach Fig. 1 hat die Verbundfolie eine Mittelschicht 1 aus 40 μm starker Aluminiumfolie, die auf der Außenseite eine 45 g/m² starke Zwischenschicht 2 aus einem weiß eingefärbten Copolymeren aus Äthylen-Acrylsäure trägt.

Diese Zwischenschicht 2 dient als Haftvermittler für eine äußere Deckschicht 3, die aus zwei miteinander coextrudierten Lagen 4 und 5 aus Polyäthylen besteht. Die innere Lage 4 ist weiß eingefärbt und 80 μm stark, während die äußere Lage 5 nur 30 μm stark und transparent ist.

Auf der inneren Seite der Mittelschicht 1 aus Aluminium ist ebenfalls eine Zwischenschicht 6 aufgebracht, die etwa 45 g/m² beträgt, aus einem transparenten Copolymer aus Äthylen-Acrylsäure besteht und als Haftvermittler für eine innere Deckschicht 7 dient. Diese innere Deckschicht besteht aus transparentem Polyäthylen und ist 70 μm stark.

Beim Ausführungsbeispiel nach Fig. 2 ist der Aufbau der Verbundfolie nach außen hin gleich dem des Ausführungsbeispiels nach Fig. 1. Auch auf der Innenseite ist wieder die Zwischenschicht 6 aus einem Copolymeren aus Äthylen-Acrylsäure als Haftvermittler angeordnet. Mit diesem Haftvermittler ist jedoch auch auf der Innenseite eine coextrudierte Deckschicht 8 auf die Aluminiumfolie aufkaschiert. Die Deckschicht 8 besteht dabei aus zwei miteinander coextrudierten Lagen 9 und 10 aus Polyäthylen, die beide transparent sind.

## Ansprüche

1. Verbundfolie, insbesondere zum Herstellen von Behältern, mit einer Mittelschicht aus Aluminium sowie zwei Deckschichten aus Kunststoff, die über jeweils eine vorzugsweise aus einem Copolymeren aus Äthylen-Acrylsäure bestehenden Kleber-Zwischenschicht mit der Mittelschicht verbunden sind, **dadurch gekennzeichnet,** daß die äußere Deckschicht (3) aus zwei miteinander coextrudierten Lagen (4,5) aus Polyäthylen oder eines Copolymeren aus Äthylen und Vinylacetat besteht, von denen die innere eingefärbt und die äußere transparent

2. Verbundfolie nach Anspruch 1, **dadurch gekennzeichnet,** daß auch die innere Deckschicht (8) aus zwei miteinander coextrudierten Lagen (9,10) aus Polyäthylen oder eines Copolymeren aus Äthylen und Vinylacetat besteht.

## Claims

1. Multilayer film/foil combination for the production of containers in particular, with a middle layer made from aluminium and two top layers made from plastic, each of which is bonded to the middle layer by an intermediate layer of adhesive that preferably consists of a copolymer made from ethylene acrylic acid, wherein the outer top layer (3) consists of two coextruded layers (4, 5) of polyethylene or a copolymer made from ethylene and vinyl acetate, the inner of which is coloured and the outer of which is transparent.

2. Multilayer film/foil combination according to claim 1, wherein the inner top layer (8) also consists of two coextruded layers (9, 10) of polyethylene or a copolymer made from ethylene and vinyl acetate.

## Revendications

1. Feuille composite convenant en particulier à l'utilisation pour la fabrication de récipients, comprenant une couche médiane d'aluminium et deux couches de couverture en résine synthétique associées chacune avec la couche médiane par une couche intermédiaire adhésive consistant en un copolymère éthylène-acide acrylique, caractérisée en ce que la couche de couverture extérieure 3 consiste en deux couches 4, 5 coextrudées en polyéthylène ou en un copolymère de l'éthylène et de l'acétate de vinyle, dont la couche intérieure est colorée et la couche extérieure transparente.

2. Feuille composite selon la revendication 1, caractérisée en ce que la couche de couverture intérieure 8 consiste également en deux couches 9, 10 coextrudées en polyéthylène ou en un copolymère de l'éthylène et de l'acétate de vinyle.

*Fig.1.*

*Fig.2.*

4